# EUROPEAN PATENT SPECIFICATION

(11) **EP 4 183 544 B1**
(45) Date of publication and mention of the grant of the patent: **09.10.2024**
(21) Application number: 22203100.7
(22) Date of filing: 21.10.2022
(51) Int. Cl.: B29C 44/08, B29C 44/58, B29C 44/04, B29C 44/06, B29C 44/34, B29L 31/30

(54) **A LIGHTWEIGHT FOAMING PROCESS**
LEICHTES SCHÄUMUNGSVERFAHREN
PROCÉDÉ DE MOUSSAGE LÉGER

(30) Priority: 23.11.2021 CN 202111392086
(43) Date of publication of application: 24.05.2023
(73) Proprietor: Faurecia (China) Investment Co., Ltd., Shanghai 201100 (CN)
(72) Inventor: Su, Haowen, Shanghai (CN); Wang, Yanyang, Shanghai (CN)
(74) Representative: Prinz & Partner mbB

(56) References cited:
- WO-A1-2017/182591
- WO-A1-2017/182913
- CN-A- 101 293 401
- JP-A- 2006 281 698
- US-A- 5 100 187
- US-A1- 2005 058 824

## Description

### Technical Field

The present invention relates to a field of foaming technology, in particular to a lightweight foaming process.

### Background

In the traditional foaming process, the thickness of a foamed layer of a top cover plate is about 6-8 mm and its weight is about 800 g. Because the thickness is too large, a large weight is thereby caused with a density of about 180 g/L.

In the traditional foaming process, modules are in fixed positions. During the foaming process, there is no insufficient movement of the mould. The thickness of the foamed layer is 7 mm, and the foaming density is 160-180 g/L. This foaming concept is a mature and stable process.

The existing technology of foaming processes results in higher densities, heavier weights, and thus causing higher costs.

In view of this, those skilled in the art designed a lightweight foaming process in order to overcome the above-mentioned technical problems.

Several documents in literature address these technical problems in part. The documents US 2005/058824 A1, WO 2017/182913 A1 and WO 2017/182591 A1 disclose systems and methods to create a foamed member by injection moulding of a foaming material into a mould cavity. After injection, waiting is performed to partially solidify the injected material such that a skin layer is formed. Subsequent enlargement of the mould cavity results in expansion of the still soft material in the middle of the mould cavity and thus higher central porosity.

JP 2006 281698 A discloses a two-step injection moulding process. According to this method, a plastic material is injected into a mould cavity and solidified. Afterwards, the mould cavity is enlarged to create space for a second injection of a foaming material.

CN 101 293 401 A discloses a surface treating method for a foaming product characterized in that after the foamed product is demoulded, the surface of the foamed product is subjected to flame treatment.

However, the cited state of the art does not provide a solution on how to create a foamed member with decreased density that incorporates a premanufactured plastic skeleton of an automotive interior part.

### Summary

The technical problem to be solved by the present invention is to overcome the disadvantages of higher densities, heavier weights and higher costs in the foaming process of the existing technology, and to provide a lightweight foaming process.

The above-mentioned technical problems are solved by a lightweight foaming process according to claim 1, used for an automotive interior, wherein the lightweight foaming process comprises following steps:
51, closing a mould to a first predetermined position to form a first mould cavity space;
S2, injecting a foaming material into the first mould cavity space;
S3, waiting for the foaming material to react and expand within the first mould cavity until the foaming material fills the first mould cavity space;
S4, moving the mould upwardly to open the mould to a second predetermined position, wherein the first mould cavity space is enlarged to form a second mould cavity space;
S5, waiting for the foaming material to continue to expand and fill along a mould opening direction until the second mould cavity space is filled;
S6, opening the mould and removing a foamed member.

According to the invention, the following steps are further comprised by the process before the step S 1: performing a flame treatment on a plastic skeleton of the automotive interior, preheating a skin of the automotive interior, and then placing the skeleton and the skin on a predetermined position within the mould.

According to the invention, steps are further comprised after the step S3: sealing the first mould cavity space totally with a sealing strip and after the step S4: retracting the sealing strip and exhausting the second mould cavity space.

According to an embodiment of the present invention, the step S1 further comprises: heating the first mould cavity space to an operating temperature of 60 °C to 80 °C.

According to an embodiment of the present invention, the first mould cavity space has a thickness of 2-4 mm.

According to an embodiment of the present invention, the step S2 has a duration between the 0th to 4th second.

According to an embodiment of the present invention, the step S3 has a duration between the 4th to 40th second.

According to an embodiment of the present invention, the second mould cavity space has a thickness of 6-8 mm.

According to an embodiment of the present invention, the step S5 has a duration between the 40th to 55th second until the foaming material is cured.

The positive progressive effect of the present invention is that:
the lightweight foaming process according to the present invention can reduce the density of a foamed layer, thereby reducing the weight. The reduction of the weight can reduce the use of materials, thereby reducing costs. The reduction of the use of the foaming material can also be more environmentally friendly.

The lightweight foaming process only needs to change the foaming process sequence to obtain a foamed layer with lower density under the same thickness. Using the mould opening action during the foaming process helps the foaming material to expand in the cavity and reduces the density of the foamed layer, thereby reducing the use of materials. Therefore, components can be made lighter and cheaper.

### Brief Description of the Drawings

The above and other features, properties and advantages of the present invention will become more obvious through the following description in combination with the drawings and embodiments. The same reference numerals in the drawings always represent the same features.
Fig. 1 is a schematic flow chart of a lightweight foaming process according to the present invention.
Fig. 2 is a flow chart of a lightweight foaming process according to the present invention.

### Reference numerals

| | |
|---|---|
| Upper mould | 10 |
| Lower mould | 20 |
| First mould cavity space | 30 |
| Foaming material | 40 |
| Second mould cavity space | 31 |

### Detailed Description of Embodiments

In order to make the above objects, features and advantages of the present invention more clearly understood, the specific embodiments of the present invention will be described in detail below with reference to the accompanying drawings.

Now, embodiments of the present invention will be described in detail with reference to the accompanying drawings. Now, reference will be made in detail to the preferred embodiments of the present invention, examples of which are illustrated in the accompanying drawings. Wherever possible, the same reference numerals will be used throughout the drawings to refer to the same or similar parts.

In addition, although the terms used in the present invention are selected from well-known and common terms, some terms mentioned in the present specification may be selected by the applicant according to his or her judgement, and the detailed meanings thereof are explained in the relevant part of this description.

Furthermore, the present invention should be understood not only by the actual terms used, but also by the meanings implied by each term.

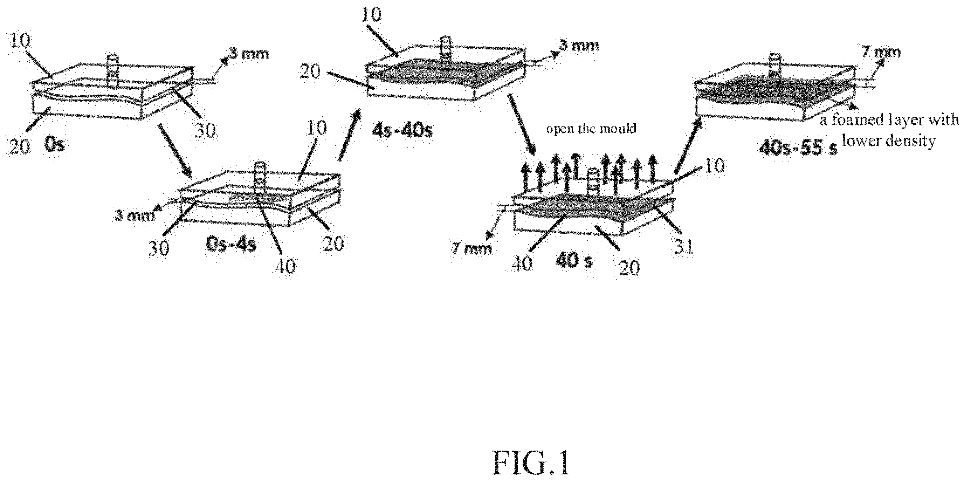

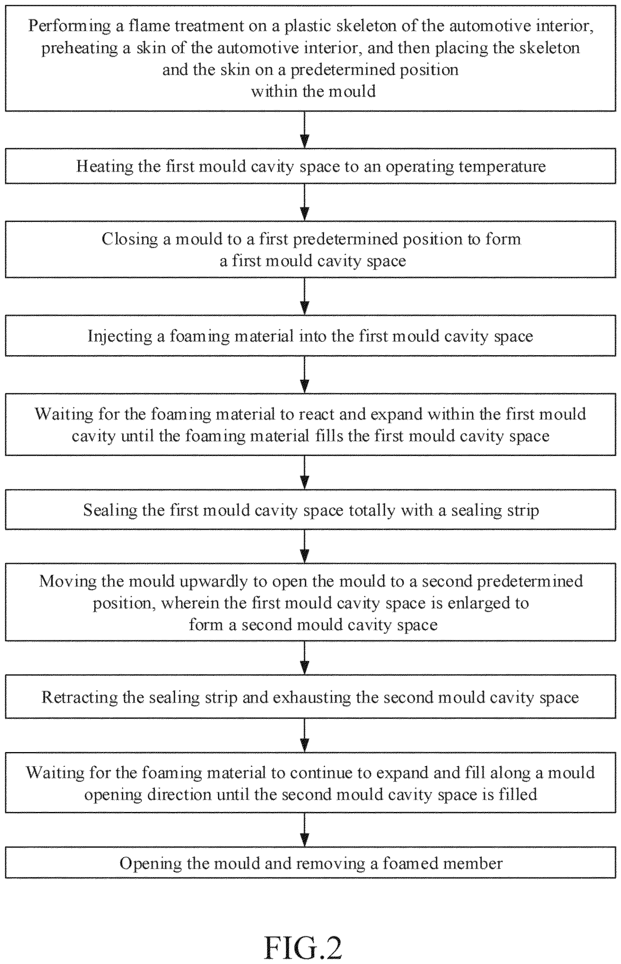

Fig. 1 is a schematic flow chart of a lightweight foaming process according to the present invention. Fig. 2 is a flow chart of a lightweight foaming process according to the present invention.

As shown in Fig. 1 and Fig. 2, the present invention discloses a lightweight foaming process, used for an automotive interior, and it comprises following steps:
S₁, closing a mould to a first predetermined position to form a first mould cavity space. The mould comprises an upper mould 10 and a lower mould 20, with a first mould cavity space 30 formed between the upper mould 10 and the lower mould 20.

Steps are further comprised before the step S₁: performing a flame treatment on a plastic skeleton of the automotive interior, preheating a skin of the automotive interior, and then placing the skeleton and the skin on a predetermined position within the mould.

Besides, the step S₁ also preferably comprises: heating the first mould cavity space to an operating temperature of 60°C to 80°C.

Wherein, the first mould cavity space 30 has a preferred thickness of 2-4 mm.

S₂, injecting a foaming material into the first mould cavity space.

S₃, waiting for the foaming material 40 to react and expand within the first mould cavity 30 until the foaming material 40 fills the first mould cavity space 30.

Steps are further comprised after the step S₃: sealing the first mould cavity space totally with a sealing strip.

S₄, moving the mould upwardly to open the mould to a second predetermined position, wherein the first mould cavity space 30 is enlarged to form a second mould cavity space 31. The second mould cavity space 31 has a preferred thickness of 6-8 mm.

Further steps are comprised after the step S₄: retracting the sealing strip and exhausting the second mould cavity space 31.

S₅, waiting for the foaming material 40 to continue to expand and fill along a mould opening direction until the second mould cavity space 31 is filled.

S₆, opening the mould and removing a foamed member.

As shown in Fig. 1, supposed that the step S₂ has a duration between the 0th to 4th second, then the step S₃ has a duration between the 4th to 40th second, and the step S₅ has a duration between the 40th to 55th second until the foaming material is cured.

According to the above description, the lightweight foaming process according to the present invention is mainly based on two basic concepts:
1. for the same weight of materials, the smaller the mould gap, the higher the expansion of the material;
2. for the general foaming process, at the end of the process, there will be gas escaping from the edge of the material, and the escaping gas is not used for the expansion of the foam, which means that the gas is wasted.

Compared with the general process, the lightweight foaming process can reduce the density by about 20% under the same thickness. Therefore, the use of the same foaming material can lead to a reduction in the cost of the foaming material.

The lightweight foaming process only needs to change the foaming process sequence to obtain a foamed layer with lower density under the same thickness. The following helps the foaming material to expand in the cavity: Closing the mould to a position 1 (which is the first predetermined position, e.g. 3 mm), and then opening the mould to a position 2 (which is the second predetermined position, e.g. 6.5 mm) in the foaming process to help the foaming material to expand along the vertical direction of the foamed surface.

In the lightweight foaming process it is possible to start with a smaller mould gap and inject the same weight of foaming material. At this stage, the foam will expand to a larger area. When the foam fills the cavity, the mould opening gap increases, the foam expands along the thickness direction, and the density of the foamed layer decreases.

The mould is then opened to a larger mould gap, using the gas to help the foam expand in the thickness direction (which means that the gas does not escape, so it is not wasted), and then a foamed layer with lower density is obtained. Therefore, the lightweight foaming process reduces the density of the foamed layer by upgrading the foaming process, thereby reducing the use of materials and making the components lighter and cheaper.

In summary, the lightweight foaming process according to the present invention can reduce the density of a foamed layer, thereby reducing the weight. The reduction of the weight can reduce the use of materials, thereby reducing costs. The reduction of the use of the foaming material can also be more environmentally friendly.

The lightweight foaming process only needs to change the foaming process sequence to obtain a foamed layer with lower density under the same thickness. Using the mould opening action during the foaming process helps the foaming material to expand in the cavity, and reduces the density of the foamed layer by upgrading the foaming process, thereby reducing the use of materials. Therefore, components can be made lighter and cheaper.

Although specific embodiments of the present invention have been described above, those skilled in the art will understand that these are merely illustrative, and the scope of the present invention is defined by the appended claims.

## Claims

1. A lightweight foaming process, used for an automotive interior,
wherein the lightweight foaming process comprises following steps:
S₁, closing a mould (10, 20) to a first predetermined position to form a first mould cavity space (30);
S₂, injecting a foaming material (40) into the first mould cavity space (30);
S₃, waiting for the foaming material (40) to react and expand within the first mould cavity until the foaming material (40) fills the first mould cavity space (30);
S₄, moving the mould (10) upwardly to open the mould (10, 20) to a second predetermined position, wherein the first mould cavity space (30) is enlarged to form a second mould cavity space (31);
S₅, waiting for the foaming material (40) to continue to expand and fill along a mould opening direction until the second mould cavity space (31) is filled;
S₆, opening the mould (10, 20) and removing a foamed member;
wherein the following steps are further comprised before the step S₁: performing a flame treatment on a plastic skeleton of the automotive interior, preheating a skin of the automotive interior, and then placing the skeleton and the skin on a predetermined position within the mould (10, 20);
**characterized in that** steps are further comprised after the step S₃: sealing the first mould cavity space (30) totally with a sealing strip; and
**in that** steps are further comprised after the step S₄: retracting the sealing strip and exhausting the second mould cavity space (31).

2. The lightweight foaming process according to claim 1, which is **characterized in that** the step S₁ further comprises: heating the first mould cavity space (30) to an operating temperature of 60°C to 80°C.

3. The lightweight foaming process according to any of the preceding claims, which is **characterized in that** the first mould cavity space (30) has a thickness of 2-4 mm.

4. The lightweight foaming process according to any of the preceding claims, which is **characterized in that** the step S₂ has a duration between the 0th to 4th second.

5. The lightweight foaming process according to claim 4, which is **characterized in that** the step S3 has a duration between the 4th to 40th second.

6. The lightweight foaming process according to claim 5, which is **characterized in that** the second mould cavity space (31) has a thickness of 6-8 mm.

7. The lightweight foaming process according to claim 6, which is **characterized in that** the step S₅ has a duration between the 40th to 55th second until the foaming material (40) is cured.

## Patentansprüche

1. Leichtschäumverfahren, das für einen Kraftfahrzeuginnenraum verwendet wird, wobei das Leichtschäumverfahren die folgenden Schritte umfasst:
S₁, Schließen einer Form (10, 20) in eine erste vorbestimmte Position zur Bildung eines ersten Formhohlraums (30),
S₂, Einspritzen eines Schäummaterials (40) in den ersten Formhohlraum (30), S₃, Warten darauf, dass das Schäummaterial (40) reagiert und sich innerhalb des ersten Formhohlraums ausdehnt, bis das Schäummaterial (40) den ersten Formhohlraum (30) ausfüllt,
S₄, Bewegen der Form (10) nach oben zum Öffnen der Form (10, 20) in eine zweite vorbestimmte Position, wobei der erste Formhohlraum (30) so vergrößert wird, dass ein zweiter Formhohlraum (31) gebildet wird,
S₅, Warten darauf, dass das Schäummaterial (40) entlang einer Formöffnungsrichtung weiter aufschäumt und füllt, bis der zweite Formhohlraum (31) ausgefüllt ist,
Se, Öffnen der Form (10, 20) und Entnehmen eines geschäumten Elements,
wobei vor dem Schritt S₁ ferner die folgenden Schritte enthalten sind: Durchführen einer Beflammung eines Kunststoffskeletts des Kraftfahrzeuginnenraums, Vorwärmen einer Haut des Kraftfahrzeuginnenraums und danach Anordnen des Skeletts und der Haut an einer vorbestimmten Position in der Form (10, 20),
**dadurch gekennzeichnet, dass** nach dem Schritt S₃ ferner Schritte enthalten sind: vollständiges Abdichten des ersten Formhohlraums (30) mit einem Dichtungsstreifen, und
dass nach dem Schritt S₄ ferner Schritte enthalten sind: Zurückziehen des Dichtungsstreifens und Evakuieren des zweiten Formhohlraums (31).

2. Leichtschäumverfahren nach Anspruch 1, das **dadurch gekennzeichnet ist, dass** der Schritt S₁ ferner Folgendes umfasst: Erwärmen des ersten Formhohlraums (30) auf eine Betriebstemperatur von 60°C bis 80°C.

3. Leichtschäumverfahren nach einem der vorhergehenden Ansprüche, das **dadurch gekennzeichnet ist, dass** der erste Formhohlraum (30) eine Dicke von 2 bis 4 mm aufweist.

4. Leichtschäumverfahren nach einem der vorhergehenden Ansprüche, das **dadurch gekennzeichnet ist, dass** der Schritt S₂ eine Dauer zwischen der 0. und der 4. Sekunde hat.

5. Leichtschäumverfahren nach Anspruch 4, das **dadurch gekennzeichnet ist, dass** der Schritt S₃ eine Dauer zwischen der 4. und der 40. Sekunde hat.

6. Leichtschäumverfahren nach Anspruch 5, das **dadurch gekennzeichnet ist, dass** der zweite Formhohlraum (31) eine Dicke von 6 bis 8 mm aufweist.

7. Leichtschäumverfahren nach Anspruch 6, das **dadurch gekennzeichnet ist, dass** der Schritt S₅ eine Dauer zwischen der 40. und der 55. Sekunde hat, bis das Schäummaterial (40) ausgehärtet ist.

## Revendications

1. Procédé de moussage léger utilisé pour un habitacle automobile,
le procédé de moussage léger comprenant les étapes suivantes :
S₁, fermer un moule (10, 20) dans une première position prédéterminée de manière à former un premier espace creux de moule (30) ;
S₂, injecter un matériau moussant (40) dans le premier espace creux de moule (30) ;
S₃, attendre que le matériau moussant (40) réagisse et se dilate dans la première cavité de moule jusqu'à ce que le matériau moussant (40) remplisse le premier espace creux de moule (30) ;
S₄, déplacer le moule (10) vers le haut pour ouvrir le moule (10, 20) dans une deuxième position prédéterminée, le premier espace creux de moule (30) étant élargi pour former un deuxième espace creux de moule (31) ;
Se, attendre que le matériau moussant (40) continue à se dilater et à remplir selon un sens d'ouverture de moule jusqu'au remplissage du deuxième espace creux de moule (31) ;
S₆, ouvrir le moule (10, 20) et extraire un élément moussé ;
les étapes suivantes étant en outre comprises avant l'étape S₁ :
réaliser un traitement à la flamme sur une ossature en plastique de l'habitacle automobile, préchauffer un panneau de l'habitacle automobile, et ensuite placer l'ossature et le panneau dans une position prédéterminée à l'intérieur du moule (10, 20) ;
**caractérisé en ce que** des étapes sont en outre comprises suite à l'étape S₃ :
étancher le premier espace creux de moule (30) entièrement avec une bande d'étanchement ; et
**en ce que** des étapes sont en outre comprises suite à l'étape S₄: retirer la bande d'étanchement et évacuer le deuxième espace creux de moule (31).

2. Procédé de moussage léger selon la revendication 1, **caractérisé en ce que** l'étape S₁ comprend en outre le chauffage du premier espace creux de moule (30) à une température de fonctionnement comprise entre 60 °C et 80 °C.

3. Procédé de moussage léger selon l'une des revendications précédentes, **caractérisé en ce que** le premier espace creux de moule (30) présente une épaisseur de 2 à 4 mm.

4. Procédé de moussage léger selon l'une des revendications précédentes, **caractérisé en ce que** l'étape S₂ a une durée entre la 0^{e} et la 4^{e} seconde.

5. Procédé de moussage léger selon la revendication 4, **caractérisé en ce que** l'étape S₃ a une durée entre la 4^{e} et la 40^{e} seconde.

6. Procédé de moussage léger selon la revendication 5, **caractérisé en ce que** le deuxième espace creux de moule (31) présente une épaisseur de 6 à 8 mm.

7. Procédé de moussage léger selon la revendication 6, **caractérisé en ce que** l'étape S₅ a une durée entre la 40^{e} et la 55^{e} seconde jusqu'au durcissement du matériau moussant (40).
